# FASCICULE DE BREVET EUROPEEN

(11) **EP 1 460 004 B1**
(45) Date de publication et mention de la délivrance du brevet: **21.05.2008**
(21) Numéro de dépôt: 04290753.5
(22) Date de dépôt: 19.03.2004
(51) Int. Cl.: B65F 1/14, F16C 27/06

(54) **Bac roulant de collecte de déchets**
Mit Laufrädern versehener Müllsammelbehälter
Wheeled refuse collecting receptacle

(30) Priorité: 21.03.2003 FR 0303486
(43) Date de publication de la demande: 22.09.2004
(73) Titulaire: COMPAGNIE PLASTIC OMNIUM, 69007 Lyon (FR)
(72) Inventeur: Serrault, Jean-Pierre, 92700 Colombes (FR)
(74) Mandataire: Remy, Vincent Noel Paul

(56) Documents cités:
- EP-A- 0 808 729
- FR-A- 1 347 877
- FR-A- 2 725 939
- FR-A- 2 754 796
- GB-A- 597 881

## Description

La présente invention a pour objet un bac roulant de collecte de déchets.

Ce type de bac roulant présente généralement l'inconvénient que, lorsqu'il est déplacé, notamment sur une surface présentant des aspérités, des vibrations mécaniques sont transmises de l'arbre ou du moyeu de la roue vers la cuve. Cette dernière jouant un rôle de caisse de résonance, ces vibrations peuvent générer un bruit important.

On connaît par la demande de brevet FR 2 730 455 de la déposante un dispositif de montage d'une roue sur un arbre porté par un palier, la roue comportant un moyeu qui s'étend sur un de ses côtés. Le palier présente un diamètre supérieur à celui de l'arbre, de sorte qu'il existe un espace annulaire libre entre l'arbre et le palier, et le dispositif comporte une bague logeant un ressort hélicoïdal , engagée autour de l'arbre entre le palier et le moyeu de la roue, la bague comportant, du côté du palier, une extrémité chanfreinée apte à occuper ledit espace annulaire, et du côté du moyeu de la roue, une butée apte à prendre appui contre le moyeu, des moyens de retenue étant prévus pour immobiliser axialement la roue sur l'arbre en maintenant la bague en compression axiale entre le palier et le moyeu.

Ce dispositif monté sur un bac roulant permet de réduire le bruit généré par le bac lors du roulage, mais nécessite d'adapter la structure de l'arbre et des roues.

On connaît également par la demande de brevet européen EP 808 729 un bac roulant de collecte de déchets correspondant au préambule de la revendication 1 annexée et comportant une roue fixée sur un arbre par l'intermédiaire d'un manchon en plastique. Celui-ci comporte une portée de guidage en contact avec un palier de la cuve permettant d'avoir un contact plastique contre plastique afin de limiter les bruits de roulement.

La présente invention vise notamment à proposer un bac roulant qui permet de réduire encore davantage le bruit généré lors du roulage, et ce par des moyens simples et économiques.

L'invention a ainsi pour objet un bac roulant de collecte de déchets, comportant :
- un arbre portant au moins une roue comprenant un moyeu,
- une cuve pourvue d'au moins un palier de support de l'arbre, présentant une ouverture dans laquelle peut s'engager ledit arbre,
caractérisé par le fait que le bac comporte au moins une garniture, notamment de forme annulaire, réalisée en un matériau élastique apte à s'opposer à la transmission de vibrations mécaniques, et disposée dans l'ouverture du palier de manière à s'intercaler entre, d'une part, le palier et, d'autre part, l'arbre et/ou le moyeu de la roue.

La garniture permet de réduire, sinon empêcher complètement, la transmission de vibrations mécaniques de l'arbre et/ou du moyeu de la roue vers la cuve.

Grâce à l'invention, on peut ainsi réduire de manière relativement simple et économique le bruit généré par le bac lors du roulage.

De préférence, la garniture est réalisée en élastomère.

Dans un exemple de mise en oeuvre de l'invention, la garniture est solidaire, sur une surface radialement intérieure, d'une bague dans laquelle s'engage l'arbre ou le moyeu de la roue.

Ainsi l'arbre et/ou le moyeu ne viennent pas frotter directement sur la garniture lors de la rotation.

La garniture peut être prise en sandwich entre deux bagues, l'une intérieure dans laquelle s'engage l'arbre et/ou le moyeu de la roue, et l'autre extérieure apte à être fixée sur le palier, ces bagues étant agencées de manière à ce qu'elles puissent se déplacer au moins radialement l'une par rapport à l'autre en déformant la garniture.

L'une au moins des bagues est avantageusement réalisée en un matériau compatible avec le matériau de la garniture afin de permettre une fixation de la bague sur la garniture, notamment par soudage.

L'une au moins des bagues peut être réalisée en matière plastique, de préférence une polyoléfine, un polyamide ou un polyacétal, par exemple du polyéthylène.

Dans un exemple de mise en oeuvre de l'invention, l'une au moins des bagues et la garniture sont réalisées par co-moulage, ou par d'autres procédés, notamment par surmoulage.

De préférence, l'arbre, le moyeu de la roue et la ou les bagues précitées sont agencés de manière à ce que les vibrations mécaniques de l'arbre et/ou du moyeu puissent se propager vers la cuve uniquement suivant un chemin de propagation passant par la garniture en matériau élastique.

Dans un exemple de mise en oeuvre de l'invention, le moyeu de la roue vient s'appliquer sur la garniture en matériau élastique ou la bague intérieure précitée.

Cette bague intérieure comporte avantageusement une collerette s'étendant sensiblement perpendiculairement à l'arbre et sur laquelle vient s'appliquer le moyeu de la roue.

Ainsi, on évite que des vibrations mécaniques ne se transmettent à la cuve par exemple par contact du moyeu de roue sur la bague extérieure.

La garniture peut comporter une portion formant manchon et une portion formant collerette à une extrémité dudit manchon, la portion formant collerette s'étendant perpendiculairement à l'arbre et étant prise en sandwich entre d'une part, la collerette de la bague intérieure et d'autre part, la bague extérieure.

La bague extérieure peut comporter un chanfrein permettant de faciliter le montage de celle-ci sur le palier.

L'arbre peut comporter un renfoncement, notamment annulaire, permettant de recevoir une bague en contact avec la garniture, ce qui permet de réduire l'encombrement radial de l'assemblage de la bague sur l'arbre.

Ainsi, il est possible d'utiliser des cuves existantes sans modifier les paliers associés et les équiper d'un arbre avec la garniture en matériau élastique conforme à l'invention.

Le renfoncement de l'arbre présente avantageusement une dimension axiale, dans la direction de l'axe de l'arbre, supérieure à la dimension axiale de la bague qui vient se loger dans le renfoncement, de préférence étant supérieure ou égale à 1,5 fois cette dimension axiale, de préférence encore supérieure ou égale à deux fois.

Ceci permet un montage aisé de la bague avec la garniture sur l'arbre, lorsque celui-ci est en place dans les paliers.

L'une au moins des bagues peut être fendue de manière à pouvoir se déformer radialement afin de faciliter le montage sur l'arbre.

En variante, les bagues sont continues, c'est-à-dire non fendues.

La garniture peut présenter une forme annulaire continue ou, en variante, les bagues intérieure et extérieure sont reliées entre elles par une pluralité d'éléments de garniture en matériau élastique, séparés les uns des autres.

La garniture peut comporter au moins une portion annulaire apte à venir s'appliquer axialement contre le palier et, de préférence, deux portions annulaires sensiblement parallèles définissant entre elles une gorge dans laquelle peut s'engager une région du palier adjacente à l'ouverture.

Dans un exemple de mise en oeuvre de l'invention, l'arbre porte deux roues situées chacune à une extrémité, la cuve comportant deux paliers dans lesquels s'engage ledit arbre.

L'invention pourra être mieux comprise à la lecture de la description détaillée qui va suivre, d'exemples de mise en oeuvre non limitatifs, et à l'examen du dessin annexé, sur lequel :
- la figure 1 représente, schématiquement et partiellement, en vue de derrière, un bac roulant de collecte de déchets conforme à l'invention,
- la figure 2 est une vue schématique et partielle, en coupe, d'un détail du bac de la figure 1,
- la figure 3 représente, schématiquement et partiellement, un autre exemple de mise en oeuvre de l'invention,
- la figure 4 représente, schématiquement et partiellement, un bac conforme à un autre exemple de mise en oeuvre de l'invention, et
- les figures 5 et 6 illustrent, schématiquement et partiellement, en coupe suivant V-V, deux exemples de mise en oeuvre des bagues et de la garniture.

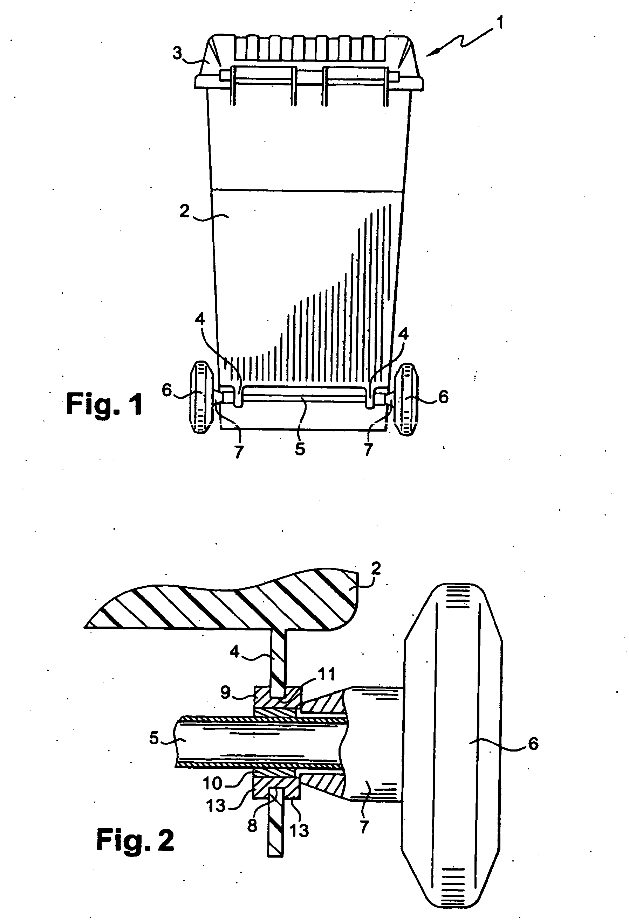

On a représenté sur la figure 1 un bac roulant de collecte de déchets 1 conforme à l'invention, comportant une cuve 2 apte à être fermée par un couvercle 3, la cuve 2 comportant inférieurement deux paliers 4 parallèles permettant la fixation d'un arbre 5 portant à ses extrémités deux roues 6.

Ces dernières comprennent chacune un moyeu 7 dirigé vers l'intérieur.

Comme illustré sur la figure 2, l'arbre 5 est maintenu dans une ouverture 8 de chaque palier 4 par l'intermédiaire d'une garniture 9 en élastomère, sur la surface radialement intérieure de laquelle est fixée une bague 10 réalisée, dans l'exemple considéré, en polyéthylène. La bague 10 reçoit l'arbre 5 qui peut tourner dans cette bague 10.

La garniture 9 et la bague 10 peuvent être réalisées séparément, puis être assemblées par exemple par soudage.

En variante, la bague 9 et la garniture 10 peuvent être réalisées par d'autres procédés notamment par co-moulage ou par surmoulage.

La garniture 9 comporte une gorge 11 dans laquelle s'engage une région du palier 4 adjacente à l'ouverture 8.

La garniture 9 présente de part et d'autre de la gorge 11 deux portions annulaires 13 venant en appui axialement contre le palier 4.

Après assemblage, le moyeu 7 de chaque roue peut venir axialement en appui contre la garniture 9, sur une portion annulaire 13 de celle-ci.

Ainsi, la roue 6 peut être amortie axialement lors du roulage du bac 1.

Les dimensions de la garniture 9 sont de préférence choisies de sorte que, après assemblage, cette garniture 9 soit légèrement comprimée radialement. De préférence, la bague 10 ne vient pas en contact avec le moyeu 7.

Ainsi, grâce à la présence de la garniture 9 en élastomère, les vibrations mécaniques de l'arbre 5 et/ou des roues 6 ne sont pas transmises ou seulement faiblement transmises à la cuve 2, réduisant ainsi le bruit généré par le bac 1 lors du roulage.

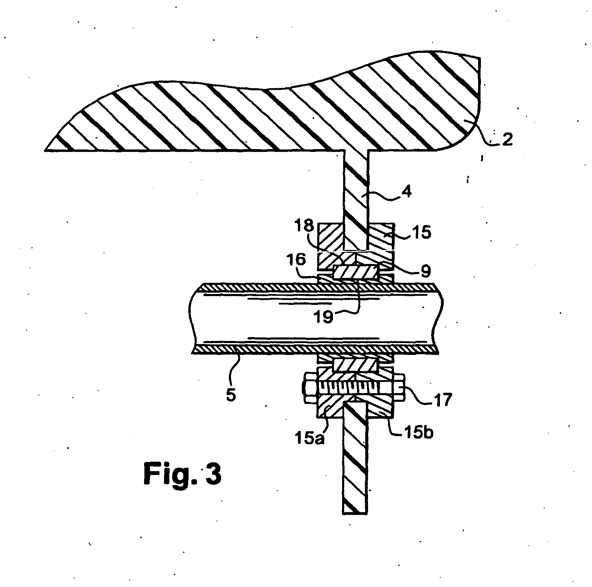

Dans l'exemple de mise en oeuvre illustré à la figure 3, la garniture 9 est prise en sandwich entre une bague extérieure 15 et une bague intérieure 16.

Les bagues 15 et 16 sont réalisées en polyéthylène dans l'exemple considéré.

La bague radialement extérieure 15 peut être constituée par deux pièces 15a et 15b assemblées sur le palier 4, dans l'exemple décrit, au moyen d'un système vis-écrou 17.

En variante, les pièces 15a et 15b peuvent être assemblées par soudage ou comporter des reliefs permettant un assemblage par encliquetage.

La bague extérieure 15 peut comporter intérieurement une gorge 18 permettant de recevoir la garniture 9.

La bague radialement intérieure 16 est destinée à recevoir l'arbre 5, sensiblement sans jeu, cette bague 16 comportant extérieurement une gorge 19 destinée à recevoir la garniture 9.

Après assemblage, les bagues 15 et 16 sont aptes à se déplacer radialement l'une par rapport à l'autre en déformant la garniture 9 et empêcher la transmission des vibrations mécaniques de l'arbre 5 vers la cuve 2.

Dans l'exemple illustré à la figure 3, la garniture 9 peut être simplement disposée entre les bagues 15 et 16, sans être fixée sur celles-ci.

Bien entendu, l'invention n'est pas limitée aux exemples de mise en oeuvre qui viennent d'être décrits.

La bague extérieure 15 peut notamment être réalisée d'un seul tenant et être fixée à force sur le palier 4.

Les bagues intérieure et extérieure peuvent notamment présenter des formes différentes.

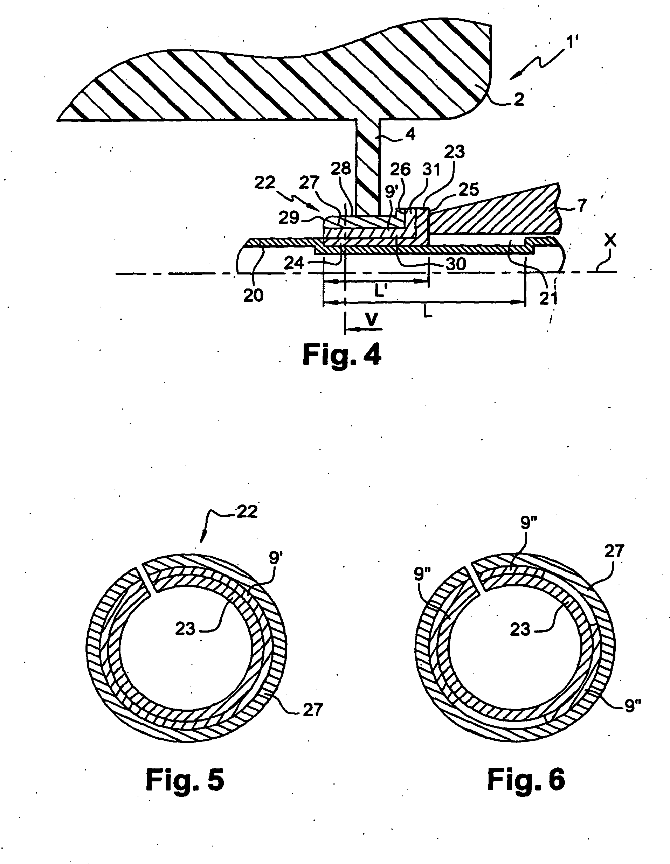

On a représente sur la figure 4 un bac 1' comportant une cuve 2 avec un palier 4, comme décrit ci-dessus.

Le bac 1' comporte en outre un arbre 20 d'axe X comportant un renfoncement annulaire 21 présentant une dimension axiale L dans une direction parallèle à l'axe X.

Un ensemble d'amortissement 22 est disposé dans ce renfoncement 21.

L'ensemble d'amortissement 22 comporte une bague intérieure 23 présentant une partie cylindrique 24 parallèle à l'axe X et une collerette 25 s'étendant sensiblement perpendiculairement à l'axe X.

Une garniture 9' est prise en sandwich entre la bague intérieure 23 et une bague extérieure 27 fixée sur le palier 4.

La bague extérieure 27 comporte une paroi extérieure cylindrique 28 venant en appui sur le palier 4, et une collerette 26 à une extrémité.

Cette bague extérieure 27 comporte à l'avant un chanfrein 29 permettant de faciliter le montage de cette bague 27 sur le palier 4.

La garniture 9' comporte une portion formant manchon 30 parallèle à l'axe X et une portion formant collerette 31 s'étendant perpendiculairement à l'axe X.

La portion 31 est prise en sandwich entre la collerette 25 de la bague intérieure 23 et la collerette 26 de la bague extérieure 27.

La bague intérieure 23 présente une dimension axiale L' choisie de manière à ce que la longueur L soit supérieure à la longueur L', par exemple environ deux fois supérieure.

Ceci permet de faciliter le montage de l'ensemble d'amortissement 22 sur l'arbre 20 lorsque celui-ci est en place sur le palier 4.

En fin de montage, le moyeu 7 de la roue 8 peut venir s'appliquer sur la collerette 25 de la bague intérieure 23, de manière à maintenir l'ensemble 22 en place.

Comme on peut le constater sur la figure 4, l'arbre 20 ou le moyeu 7 de la roue ne peuvent pas venir au contact de la bague extérieure 27 ou du palier 4, ce qui crée une rupture dans le chemin de propagation des vibrations mécaniques entre l'arbre 20 ou le moyeu 7 et la cuve 2.

Dans l'exemple considéré, la bague intérieure 23, la garniture 9', et la bague extérieure 27 sont fendues, comme illustré sur la figure 5.

Ainsi, l'ensemble d'amortissement 22 peut se déformer radialement facilitant son montage sur l'arbre 20.

Dans un autre exemple de mise en oeuvre de l'invention, la garniture ne présente pas une forme annulaire continue.

Les bagues intérieure 23 et extérieure 27 peuvent être reliées par des éléments de garniture 9" séparés les uns des autres, comme illustré sur la figure 6.

Ceci permet d'utiliser une quantité moindre de matériau élastique pour la garniture et donc de réduire le coût de revient du bac roulant.

## Revendications

1. Bac (1) roulant de collecte de déchets, comportant :
- un arbre (5) portant au moins une roue (6) comprenant un moyeu (7),
- une cuve (2) pourvue d'au moins un palier (4) de support de l'arbre (5), présentant une ouverture (8) dans laquelle peut s'engager ledit arbre (5),
**caractérisé par le fait que** le bac (1) comporte au moins une garniture (9 ; 9' ; 9"), notamment de forme annulaire, réalisée en un matériau élastique apte à s'opposer à la transmission de vibrations mécaniques, et disposée dans l'ouverture (8) du palier de manière à s'intercaler entre, d'une part, le palier (4) et, d'autre part, l'arbre (5) et/ou le moyeu (7) de la roue (6).

2. Bac (1) selon la revendication 1, **caractérisé par le fait que** la garniture (9) est réalisée en élastomère.

3. Bac (1) selon l'une des revendications 1 et 2, **caractérisé par le fait que** la garniture (9) est solidaire, sur une surface radialement intérieure, d'une bague (10) dans laquelle s'engage l'arbre (5) ou le moyeu (7) de la roue (6).

4. Bac (1) selon l'une quelconque des revendications 1 à 3, **caractérisé par le fait que** la garniture (9) est prise en sandwich entre deux bagues (15 ; 16 ; 23 ; 27), l'une intérieure (16 ; 23) dans laquelle s'engage l'arbre (5) ou le moyeu (7) de la roue (6), et l'autre extérieure (15 ; 27) apte à être fixée sur le palier (4), ces bagues (15 ; 16 ; 23 ; 27) étant agencées de manière à ce qu'elles puissent se déplacer au moins radialement l'une par rapport à l'autre en déformant la garniture (9).

5. Bac (1) selon l'une des revendications 3 et 4, **caractérisé par le fait que** l'une au moins des bagues (10 ; 15 ; 16 ; 23 ; 27) est réalisée en un matériau compatible avec le matériau de la garniture (9) afin de permettre une fixation de la bague (10 ; 15 ; 16 ; 23 ; 27) sur la garniture, notamment par soudage.

6. Bac (1) selon l'une quelconque des revendications 3 à 5, **caractérisé par le fait que** l'une au moins des bagues (10 ; 15 ; 16 ; 23 ; 27) est réalisée en matière plastique, de préférence une polyoléfine, un polyamide ou un polyacétal, notamment du polyéthylène.

7. Bac (1) selon l'une quelconque des revendications 3 à 6, **caractérisé par le fait que** l'une au moins des bagues (10 ; 15 ; 23 ; 27) et la garniture (9) sont réalisées par co-moulage ou surmoulage.

8. Bac (1) selon l'une quelconque des revendications 3 à 7, **caractérisé par le fait que** l'arbre (5), le moyeu (7) de la roue (6) et la ou les bagues (10 ; 15 ; 16 ; 23 ; 27) sont agencés de manière à ce que les vibrations mécaniques de l'arbre (5) et/ou du moyeu (7) puissent se propager vers la cuve (2) uniquement suivant un chemin de propagation passant par la garniture en matériau élastique (9 ; 9').

9. Bac (1) selon la revendication 8, **caractérise par le fait que** le moyeu (7) de la roue (6) vient s'appliquer sur la garniture en matériau élastique (9 ; 9') ou une bague intérieure (10 ; 16 ; 23).

10. Bac (1) selon la revendication 9, **caractérisé par le fait que** la bague intérieure (23) comporte une collerette (25) s'étendant sensiblement perpendiculairement à l'arbre (5) et sur laquelle vient s'appliquer le moyeu (7) de la roue (6).

11. Bac (1) selon la revendication 10, **caractérisé par le fait que** la garniture (9') comporte une portion formant manchon (30) et une portion formant collerette (31) à une extrémité dudit manchon (30), la portion formant collerette (31) s'étendant perpendiculairement à l'arbre (5) et étant prise en sandwich entre, d'une part, la collerette (25) de la bague intérieure (23) et, d'autre part, la bague extérieure (27).

12. Bac (1) selon la revendication 4 et l'une quelconque des autres revendications 3 à 11, **caractérisé par le fait que** la bague extérieure (27) comporte un chanfrein (29) permettant de faciliter le montage de la bague extérieure (27) sur le palier (4).

13. Bac (1) selon l'une quelconque des revendications 3 à 12, **caractérisé par le fait que** l'une au moins des bagues (10 ; 15 ; 16 ; 23 ; 27) est fendue

14. Bac (1) selon l'une quelconque des revendications précédentes, **caractérisé par le fait que** l'arbre (20) comporte un renfoncement (21), notamment annulaire, permettant de recevoir une bague (23) en contact avec la garniture (9').

15. Bac (1) selon la revendication 14, **caractérisé par le fait que** le renfoncement (21) présente une dimension axiale (L), dans la direction de l'axe de l'arbre (5), supérieure à deux fois la dimension axiale (L') de la bague (23) qui vient se loger dans le renfoncement (21).

16. Bac (1) selon l'une quelconque des revendications précédentes, **caractérisé par le fait que** la garniture (9) présente une forme annulaire continue.

17. Bac (1) selon l'une quelconque des revendications 1 à 15, **caractérisé par le fait qu'**il comporte des bagues intérieure (23) et extérieure (27) reliées entre elles par une pluralité d'éléments de garniture (9") en matériau élastique séparés les uns des autres.

## Claims

1. A wheeled waste-collection bin (1) comprising:
· a shaft (5) carrying at least one wheel (6) including a hub (7); and
· a vessel (2) provided with at least one bearing (4) for supporting the shaft (5) and presenting an opening (8) in which said shaft (5) can be engaged;
the bin (1) being **characterized by** the fact that it includes at least one lining (9; 9'; 9"), in particular of annular shape, made of an elastic material suitable for opposing the transmission of mechanical vibration, and disposed in the opening (8) of the bearing in such a manner as to be interposed between firstly the bearing (4) and secondly the shaft (5) and/or the hub (7) of the wheel (6).

2. A bin (1) according to claim 1, **characterized by** the fact that the lining (9) is made of elastomer.

3. A bin (1) according to claim 1 or claim 2, **characterized by** the fact that the lining (9) is secured on a radially inner surface to a ring (10) in which the shaft (5) or the hub (7) of the wheel (6) engages.

4. A bin (1) according to any one of claims 1 to 3, **characterized by** the fact that the lining (9) is sandwiched between two rings (15; 16; 23; 27), one being an inner ring (16; 23) in which the shaft (5) or the hub (7) of the wheel (6) engages, and the other being an outer ring (15; 27) suitable for being fastened to the bearing (4), the rings (15; 16; 23; 27) being arranged in such a manner as to be capable of moving at least radially relative to each other by deforming the lining (9).

5. A bin (1) according to claim 3 or claim 4, **characterized by** the fact that at least one of the rings (10; 15; 16; 23; 27) is made of a material that is compatible with the material of the lining (9) so as to enable the ring (10; 15; 16; 23; 27) to be fastened to the lining, in particular by heat-sealing.

6. A bin (1) according to any one of claims 3 to 5, **characterized by** the fact that at least one of the rings (10; 15; 16; 23; 27) is made of a plastics material, preferably a polyolefin, a polyamide, or a polyacetal, in particular of polyethylene.

7. A bin (1) according to any one of claims 3 to 6, **characterized by** the fact that at least one of the rings (10; 15; 23; 27) and the lining (9) are made by co-molding or over-molding.

8. A bin (1) according to any one of claims 3 to 7, **characterized by** the fact that the shaft (5), the hub (7) of the wheel (6), and the ring(s) (10; 15; 16; 23; 27) are arranged in such a manner that mechanical vibration of the shaft (5) and/or of the hub (7) can propagate towards the vessel (2) solely along a propagation path passing via the lining of elastic material (9; 9').

9. A bin (1) according to claim 8, **characterized by** the fact that the hub (7) of the wheel (6) bears against the elastic material lining (9; 9') or against an inner ring (10; 16; 23).

10. A bin (1) according to claim 9, **characterized by** the fact that the inner ring (23) includes a collar (25) extending substantially perpendicularly to the shaft (5), and against which the hub (7) of the wheel (6) comes to bear.

11. A bin (1) according to claim 10, **characterized by** the fact that the lining (9') includes a portion forming a sleeve (30) and a portion forming a collar (31) at one end of said sleeve (30), the portion forming a collar (31) extending perpendicularly to the shaft (5) and being sandwiched between firstly the collar (25) of the inner ring (23) and secondly the outer ring (27).

12. A bin (1) according to claim 4 and any other one of claims 3 to 11, **characterized by** the fact that the outer ring (27) includes a chamfer (29) serving to facilitate mounting the outer ring (27) to the bearing (4).

13. A bin (1) according to any one of claims 3 to 12, **characterized by** the fact that at least one of the rings (10; 15; 16; 23; 27) is split.

14. A bin (1) according to any preceding claim, **characterized by** the fact that the shaft (20) includes a setback (21), in particular an annular setback, serving to receive a ring (23) in contact with the lining (9').

15. A bin (1) according to claim 14, **characterized by** the fact that the setback (21) presents an axial dimension (L) in the axial direction of the shaft (5) that is more than twice the axial dimension (L') of the ring (23) that is received in the setback (21).

16. A bin (1) according to any preceding claim, **characterized by** the fact that the lining (9) presents a continuous annular shape.

17. A bin (1) according to any one of claims 1 to 15, **characterized by** the fact that it includes inner and outer rings (23; 27) that are interconnected by a plurality of lining elements (9") of elastic material that are separate from one another.

## Patentansprüche

1. Rollender Behälter (1) zur Abfallsammlung, aufweisend:
- eine Welle (5), die mindestens ein Rad (6) trägt, das eine Nabe (7) aufweist,
- ein Behältnis (2), das mit mindestens einem Lager (4) zum Halten der Welle (5) versehen ist, das eine Öffnung (8) aufweist, in die sich die Welle (5) einfügen kann,
**dadurch gekennzeichnet, dass** der Behälter (1) mindestens ein Futter (9; 9' ; 9") hat, insbesondere in Ringform, hergestellt aus einem elastischen Werkstoff, der sich dem Übertragen mechanischer Vibrationen widersetzen kann, und in der Öffnung (8) des Lagers derart angeordnet, dass es sich zwischen einerseits das Lager (4) und andererseits die Welle (5) und/oder die Nabe (7) des Rads (6) einfügt.

2. Behälter (1) nach Anspruch 1, **dadurch gekennzeichnet, dass** das Futter (9) aus Elastomer hergestellt ist.

3. Behälter (1) nach einem der Ansprüche 1 und 2, **dadurch gekennzeichnet, dass** das Futter (9) auf einer radial inneren Oberfläche fest mit einem Ring (10) verbunden ist, in den sich die Welle (5) oder die Nabe (7) des Rads (6) einfügt.

4. Behälter (1) nach einem der Ansprüche 1 bis 3, **dadurch gekennzeichnet, dass** das Futter (9) zwischen zwei Ringen (15; 16; 23; 27) sandwich-artig aufgenommen ist, nämlich einem inneren Ring (16; 23), in den sich die Welle (5) oder die Nabe (7) des Rads (6) einfügt, und einem äußeren Ring (15; 27), der auf dem Lager (4) befestigt werden kann, wobei diese Ringe (15; 16; 23; 27) derart eingerichtet sind, dass sie sich zumindest radial zueinander unter Verformen des Futters (9) verlagern können.

5. Behälter (1) nach einem der Ansprüche 3 und 4, **dadurch gekennzeichnet, dass** mindestens einer der Ringe (10; 15; 16; 23; 27) aus einem Material hergestellt ist, das mit dem Material des Futters (9) kompatibel ist, um ein Befestigen des Rings (10; 15; 16; 23; 27) auf dem Futter, insbesondere durch Schweißen zu erlauben.

6. Behälter (1) nach einem der Ansprüche 3 bis 5, **dadurch gekennzeichnet, dass** mindestens einer der Ringe (10; 15; 16; 23; 27) aus einem Kunststoff, vorzugsweise einem Polyolefin, Polyamid oder Polyacetal, insbesondere Polyethylen, hergestellt ist.

7. Behälter (1) nach einem der Ansprüche 3 bis 6, **dadurch gekennzeichnet, dass** zumindest einer der Ringe (10; 15; 23; 27) und das Futter (9) durch gemeinsames Formen oder Abformen hergestellt sind.

8. Behälter (1) nach einem der Ansprüche 3 bis 7, **dadurch gekennzeichnet, dass** die Welle (5), die Nabe (7) des Rads (6) und der oder die Ringe (10; 15; 16; 23; 27) derart eingerichtet sind, dass sich die mechanischen Vibrationen der Welle (5) und/oder der Nabe (7) in dem Behältnis (2) nur entlang eines Ausbreitungswegs ausbreiten können, der durch das Futter (9; 9') aus elastischem Werkstoff verläuft.

9. Behälter (1) nach Anspruch 8, **dadurch gekennzeichnet, dass** die Nabe (7) des Rads (6) auf dem Futter (9; 9') aus elastischem Werkstoff oder einem Innenring (10; 15; 23) zum Anliegen kommt.

10. Behälter (1) nach Anspruch 9, **dadurch gekennzeichnet, dass** der Innenring (23) einen Kragen (25) aufweist, der sich im Wesentlichen rechtwinklig zu der Welle (5) erstreckt, und an den die Nabe (7) des Rads (6) zum Anliegen kommt.

11. Behälter (1) nach Anspruch 10, **dadurch gekennzeichnet, dass** das Futter (9') einen Abschnitt aufweist, der eine Muffe (30) bildet, und einen Abschnitt, der einen Kragen (31) an einem Ende der Muffe (30) bildet, wobei sich der den Kragen (31) bildende Abschnitt rechtwinklig zu der Welle (5) erstreckt und zwischen einerseits von dem Kragen (25) des inneren Rings (23) und andererseits von dem äußeren Ring (27) sandwich-artig aufgenommen ist.

12. Behälter (1) nach Anspruch 4 und einem der anderen Ansprüche 3 bis 11, **dadurch gekennzeichnet, dass** der äußere Ring (27) eine Abschrägung (29) aufweist, die es erlaubt, die Montage des äußeren Rings (27) auf das Lager (4) zu erleichtern.

13. Behälter (1) nach einem der Ansprüche 3 bis 12, **dadurch gekennzeichnet, dass** mindestens einer der Ringe (10; 15; 16; 23; 27) ein geschlitzter Ring ist.

14. Behälter (1) nach einem der vorhergehenden Ansprüche, **dadurch gekennzeichnet, dass** die Welle (20) eine Vertiefung (21), die insbesondere ringförmig ist, aufweist, die es erlaubt, einen Ring (23) in Berührung mit dem Futter (9') aufzunehmen.

15. Behälter (1) nach Anspruch 14, **dadurch gekennzeichnet, dass** die Vertiefung (21) ein axiales Maß (L) in der Richtung der Achse der Welle (5) aufweist, das größer ist als zwei Mal das axiale Maß (L') des Rings (23), der sich in die Vertiefung (21) einfügt.

16. Behälter (1) nach einem der vorhergehenden Ansprüche, **dadurch gekennzeichnet, dass** das Futter (9) eine kontinuierliche ringförmige Form aufweist.

17. Behälter (1) nach einem der Ansprüche 1 bis 15, **dadurch gekennzeichnet, dass** er einen inneren Ring (23) und einen äußeren Ring (27) aufweist, die miteinander durch mehrere Futterelemente (9") aus elastischem Werkstoff, die voneinander getrennt sind, verbunden sind.
